# FASCICULE DE BREVET EUROPEEN

(11) **EP 3 568 964 B1**
(45) Date de publication et mention de la délivrance du brevet: **28.06.2023**
(21) Numéro de dépôt: 17832313.5
(22) Date de dépôt: 29.12.2017
(51) Int. Cl.: H04L 9/40, H04W 4/14, H04L 67/12, H04L 9/08, H04L 9/32, H04W 12/033, H04W 12/041, H04L 51/04

(54) **PROCÉDÉ DE TRANSMISSION D'UNE INFORMATION NUMÉRIQUE CHIFFRÉE DE BOUT EN BOUT ET SYSTÈME METTANT EN OEUVRE CE PROCÉDÉ**
VERFAHREN FÜR END-TO-END-ÜBERTRAGUNG EINES TEILS EINER VERSCHLÜSSELTEN DIGITALEN INFORMATION UND SYSTEM ZUR IMPLEMENTIERUNG DIESES VERFAHRENS
METHOD FOR END-TO-END TRANSMISSION OF A PIECE OF ENCRYPTED DIGITAL INFORMATION AND SYSTEM IMPLEMENTING THIS METHOD

(30) Priorité: 10.01.2017 FR 1750212
(43) Date de publication de la demande: 20.11.2019
(73) Titulaire: Wallix, 75008 Paris (FR)
(72) Inventeur: BINSZTOK, Henri, 75004 Paris (FR)
(74) Mandataire: IP Trust
(86) Numéro de dépôt international: PCT/FR2017/053867
(87) Numéro de publication internationale: WO 2018/130761

(56) Documents cités:
- EP-A1- 1 788 770
- EP-A1- 2 680 207
- WO-A1-2016/195590
- AU-A1- 2013 205 071
- US-A1- 2002 129 238
- Alan Henry: "The Best Cloud Storage Services that Protect Your Privacy", , 7 octobre 2010 (2010-10-07), pages 1-13, XP055409356, Extrait de l'Internet: URL:https://lifehacker.com/the-best-cloud- storage-services-that-protect-your-priva-7 29639300 [extrait le 2017-09-22]

## Description

### Domaine de l'invention

La présente invention concerne le domaine de la sécurisation de communication électronique asynchrone sur des réseaux informatiques, notamment, mais non limitativement le réseau internet ou des réseaux privés virtuels.

Les informations, par exemple des données numériques produites par des objets connectés, des télécopies, ou des messages textuels, des fichiers numériques, sont transmis grâce à un ensemble standardisé de protocoles de transfert de données, qui permet l'élaboration d'applications et de services variés comme la publication de données, le courrier électronique, la messagerie instantanée, le pair-à-pair, etc.

Les solutions les plus sécurisées utilisent des techniques de chiffrement de bout en bout (« End-to-end encryption » en anglais). Lorsqu'un message est envoyé à un destinataire, celui-ci est chiffré par l'utilisateur, sur l'équipement informatique de l'émetteur, selon des solutions garantissant que seul le récepteur peut décrypter la missive. Le serveur par lequel transite la conversation ne sert qu'à relayer sans jamais tenter de le décoder. Dans ce cas, les utilisateurs peuvent communiquer entre eux sans intermédiaires.

Au lieu d'être envoyé sous forme de texte, le message est brouillé en forme de chiffres et il faut une clé pour le décrypter. Les clés sont éphémères et disparaissent quand le message a été déchiffré par l'utilisateur. De ce fait, les pirates, cybercriminels et même les employés de l'opérateur de service ne sont pas en mesure de lire les correspondances. À titre d'exemple, le service de messagerie WhatsApp (nom commercial) propose une solution de chiffrement de bout en bout.

### État de la technique

On connaît dans l'état de la technique la demande de brevet WO2014175830 décrivant un procédé pour traiter un paquet de données depuis un premier dispositif informatique vers un second dispositif informatique afin de permettre une communication de cryptage de bout en bout

Le paquet de données comprend un message crypté à l'aide d'une première clé de cryptage afin de former un message crypté, des données d'identification du second dispositif informatique cryptées à l'aide d'une seconde clé de cryptage afin de former des données d'identification cryptées, et des première et seconde clés de cryptage cryptées.

Le procédé selon cette solution connue consiste à décrypter la seconde clé de cryptage cryptée, décrypter les données d'identification cryptées à l'aide de la seconde clé de cryptage décryptée, et transmettre le paquet de données en fonction des données d'identification décryptées, le message crypté et la première clé de cryptage étant conçus pour ne pas pouvoir être décryptés par le serveur afin de permettre une communication de cryptage de bout en bout entre les premier et second dispositifs informatiques.

La demande de brevet WO2012067847 décrit également des systèmes et des procédés permettant un cryptage de bout en bout. Conformément à un mode de réalisation, un procédé d'enregistrement de dispositif comprend les étapes suivantes :
- une application exécutée par un processeur informatique reçoit un mot de passe utilisateur d'un utilisateur ;
- au moyen du processeur informatique, l'application combine le mot de passe utilisateur et une extension du mot de passe ;
- au moyen du processeur informatique, l'application traite de manière cryptographique la combinaison du mot de passe utilisateur et de l'extension du mot de passe, ce qui permet d'obtenir des informations publiques cryptographiques. Les informations publiques cryptographiques sont fournies à un serveur. Par contre, le mot de passe utilisateur n'est pas fourni au serveur.

On connaît aussi le brevet EP1536601 qui concerne un procédé de cryptage bout à bout de courriers électroniques envoyés d'un émetteur à un destinataire comportant les étapes suivantes :
a) l'émetteur demande à un système de cryptage un certificat correspondant audit destinataire,
b) le système de cryptage renvoie audit émetteur un premier certificat correspondant audit destinataire, l'émetteur envoie avec son logiciel de courrier électronique un courrier électronique sortant audit destinataire crypté avec ledit certificat,
c) ledit courrier électronique est envoyé par ledit système de cryptage.

Le système de cryptage décrypte le courrier électronique en utilisant une clé privée correspondant au certificat, et le système de cryptage rend disponible le contenu dudit courrier électronique audit destinataire.

L'émetteur demande un certificat correspondant audit destinataire à un système d'encryption dans ledit réseau privé, le système d'encryption renvoie audit émetteur un premier certificat pro forma correspondant audit destinataire, le certificat pro forma étant généré ou retrouvé par le système d'encryption pour le destinataire et seulement utilisé entre l'émetteur (1) et le système d'encryption, l'émetteur envoie avec son client e-mail un e-mail sortant audit destinataire encrypté avec ledit certificat pro forma, ledit e-mail est transmis via ledit système d'encryption, ledit système d'encryption décrypte ledit e-mail en utilisant une clé privée correspondant audit certificat, ledit système d'encryption rend le contenu dudit e-mail disponible audit destinataire.

On connaît aussi dans l'état de la technique le brevet américain US7240366 décrivant un procédé d'authentification de bout en bout basée sur les certificats de clé publique combiné avec le Session Initiation Protocol (SIP) pour permettre à un noeud SIP qui reçoit un message de requête SIP l'authentification l'expéditeur de la demande. Le message de demande SIP est envoyé avec une signature numérique générée avec une clé privée de l'expéditeur et peut inclure un certificat de l'expéditeur. Le message de demande SIP peut également être chiffré avec une clé publique du destinataire. Après avoir reçu la requête SIP, le noeud récepteur SIP obtient un certificat de l'expéditeur et authentifie l'expéditeur sur la base de la signature numérique.

La signature numérique peut être incluse dans un entête d'autorisation de la requête SIP ou dans un corps de message en plusieurs parties construit conformément à la norme S/MIME.

La demande de brevet US20100189260 décrit une solution de gestion de droits attribués à une session de communication et aux composants liés à la demande de l'utilisateur. On fournit aux participants autorisés à participer à la session des outils d'accès tels que des clés de déchiffrement. Des restrictions basées sur les droits de conversation attribués sont étendues pour préserver les enregistrements et les documents associés de la session de communication.

### Inconvénient de l'art antérieur

Les solutions de l'art antérieur permettent des transmissions de données ou messages chiffrés de bout en bout seulement entre un émetteur préalablement enregistré sur une plateforme transactionnelle et un destinataire, également préalablement enregistré sur une plateforme transactionnelle.

Lorsqu'un émetteur souhaite envoyer un message ou des données à un destinataire qui n'est pas déjà enregistré, il doit d'abord lui envoyer un message non crypté l'invitant à s'inscrire sur la plateforme transactionnelle.

Pendant ce temps, l'émetteur doit conserver le message en mémoire de son équipement informatique, surveiller la réception d'une notification d'inscription du destinataire, puis engager le processus de transmission du message ou des données chiffrées bout-en-bout avec le destinataire nouvellement inscrit.

L'interception du message d'invitation envoyé par l'émetteur peut être intercepté, et alors ouvrir une faille de sécurité.

Par ailleurs, si un délai long s'écoule entre l'envoi de l'invitation et la notification de l'enregistrement de l'émetteur, le message ou les données peuvent être perdus ou altérés.

En tout état de cause, les solutions de l'art antérieur nécessitent des mécanismes de synchronisation entre l'équipement informatique de l'émetteur, celui du destinataire et la plateforme transactionnelle.

En particulier dans la solution proposée par la demande de brevet US20100189260 (figure 3), les utilisateurs sont déjà connus de la plateforme, qui ne permet pas la communication avec un destinataire non connu de la plateforme.

Les solutions de l'art antérieur présentent par ailleurs une faille de sécurité connue sous le nom de l'attaque de l'homme du milieu (en anglais « man-in-the-middle attack ») qui est une attaque qui a pour but d'intercepter les communications entre deux parties, sans que ni l'une ni l'autre ne puisse se douter que le canal de communication entre elles a été compromis.

### Solution apportée par l'invention

L'invention est définie par les revendications indépendantes. Des modes de réalisation particuliers sont définis dans les revendications dépendantes.

### Description détaillée d'un exemple non limitatif de l'invention

La présente invention sera mieux comprise à la lecture de la description qui suit, se référant à un exemple non limitatif de réalisation illustré par les dessins annexés où :
- la figure 1 représente une vue schématique de l'architecture matérielle d'un système pour la mise en œuvre de l'invention

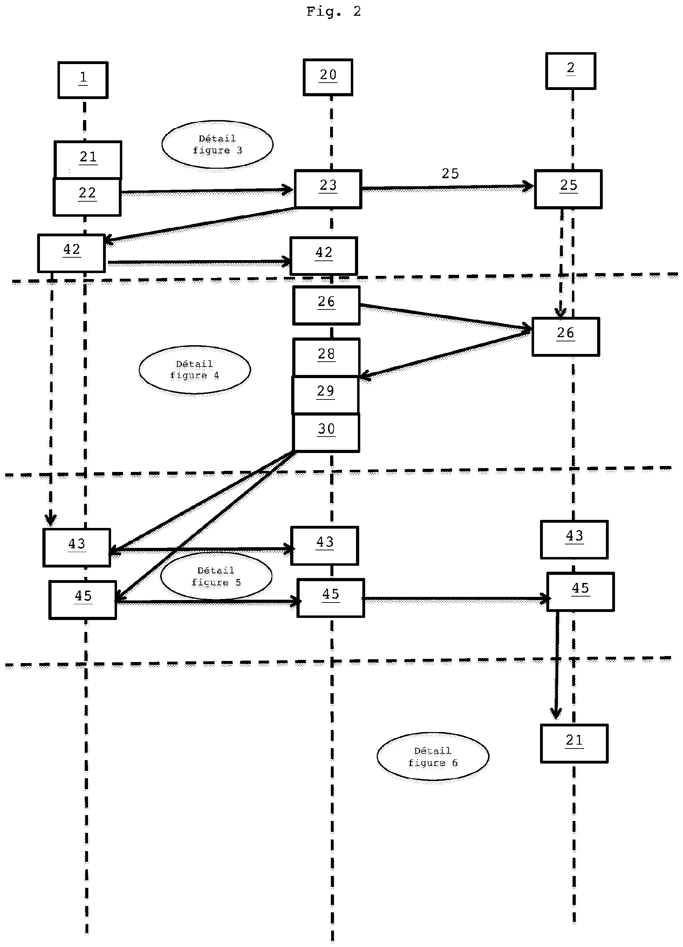

- la figure 2 représente le diagramme des échanges de données entre Alice et Bob
- la figure 3 représente le schéma fonctionnel de l'étape d'enregistrement temporaire du message d'Alice
- la figure 4 représente le diagramme de génération des informations à partir du mot de passe choisi par Bob
- la figure 5 représente le schéma fonctionnel de l'étape de rechiffrement du message par Alice
- la figure 6 représente le schéma fonctionnel de l'étape de récupération du message par Bob

### Architecture matérielle

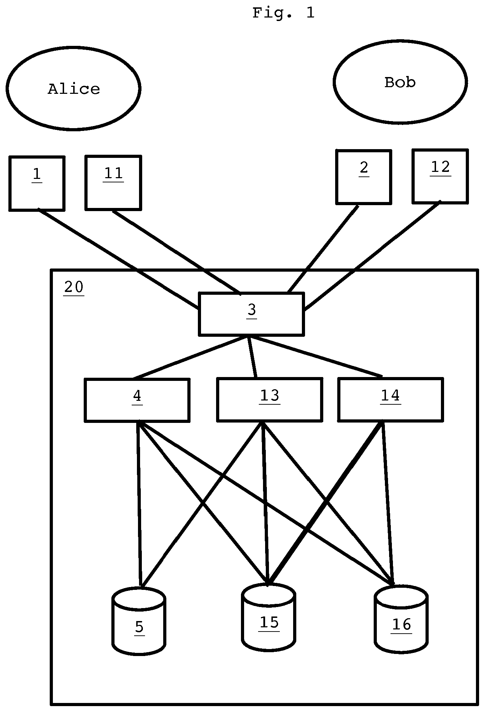

La figure 1 représente une vue schématique de l'architecture matérielle, dans une situation simplifiée concernant les échanges entre deux utilisateurs seulement.

Les utilisateurs sont appelés Alice et Bob, et utilisent chacun un ou plusieurs équipements informatiques connectés respectivement (1, 11 ; 2, 12). Il peut par exemple s'agit d'un ordinateur connecté ou d'une tablette, ou d'un téléphone de type « Smartphone ».

Lorsqu'il s'agit d'un ordinateur, il est nécessaire qu'il dispose de ressources informatiques pour accéder à un réseau, par exemple internet, et un navigateur WEB usuel.

Dans le cas d'une tablette ou d'un téléphone, l'équipement comporte également des ressources telles qu'un navigateur ou une application mobile assurant la connexion à une plateforme distante.

Le système selon l'invention met en œuvre optionnellement un proxy (3), qui distribue la charge du service vers un ou plusieurs serveurs (4, 13, 14) qui peuvent être locaux ou distants dans le « cloud », exécutant une interface de programmation interactive (API).

Les serveurs (4, 13, 14) sont associés à un ou plusieurs équipements de gestion de base de données (5, 15, 16), qui peuvent être locale ou distante dans le « cloud ».

La communication entre les différents équipements utilise une couche de transport usuelle, par exemple TCP/IP ou Lora, et une couche de communication standard, par exemple http ou https.

Le proxy (3) et les serveurs (4, 13, 14) ainsi que les équipements de gestion de base de données (5, 15, 16) forment une plateforme d'échanges sécurisés (20).

### Diagramme des échanges

L'initiateur des échanges est Alice, souhaitant transmettre à Bob un message sous une forme sécurisée via une plateforme, étant entendu que Bob ne dispose pas d'accès à la plateforme d'échanges (20).

Alice compose localement, sur l'un de ses équipements (1, 11) un message numérique (21) avec un éditeur quelconque, par exemple une application de messagerie adaptée à la plateforme (20), et donc cliente des API (4, 13, 14) et enregistre localement en mémoire tampon d'un de ses équipements (1,11).

Alice saisit ensuite un identifiant public (22) du destinataire Bob, par exemple une adresse de messagerie de Bob ou un numéro de téléphone mobile dans l'application exécutée sur son équipement de travail (1, 11).

Cette application commande alors l'ouverture d'une session de communication avec son identifiant. L'application commande ensuite l'émission d'une requête via la plateforme (20) pour la couche de transport et via cette session et, pour la couche de communication, via le jeton de session (ou mécanisme équivalent), d'identification de Bob, sous la forme d'un message comprenant au moins l'identifiant de Bob.

La plateforme (20) compare l'identifiant (22) transmis par Alice avec la liste des identifiants des titulaires d'un compte par une étape de vérification (23).

Si Bob est inconnu, c'est-à-dire ne dispose pas de compte sur la plateforme (20), la plateforme génère un compte temporaire associé à l'identifiant de Bob transmis par Alice.

Ce compte temporaire se traduit par :
- la création d'une entrée dédiée à Bob, dans la base de base de données (5, 15, 16)
- l'envoi par la plateforme (20) d'un message à Bob, contenant :
- un message textuel (25) d'information de Bob de l'existence d'un message émanant d'Alice
- un lien vers une interface de création (26) par Bob d'un mot de passe, par exemple sous forme de code JavaScript et HTML.

Cette interface de création (26) est exécutée immédiatement ou en différé sur l'équipement (2) de Bob, localement et sans communication de la chaîne de caractères (27) créée par Bob à la plateforme (20) ni aux équipements (1, 11) d'Alice et plus généralement à aucun équipement présent sur le réseau.

La plateforme (20) transmet alors à Alice à un message d'acquittement. L'envoi de ce message signifie que :
- la plateforme (20) a créé un compte temporaire affecté à Bob
- la plateforme (20) a transmis à Bob le message (25) contenant le lien lui permettant à un moment de son choix de procéder à l'étape de saisie d'un mot de passe dans l'interface (26).

### Enregistrement temporaire du message d'Alice

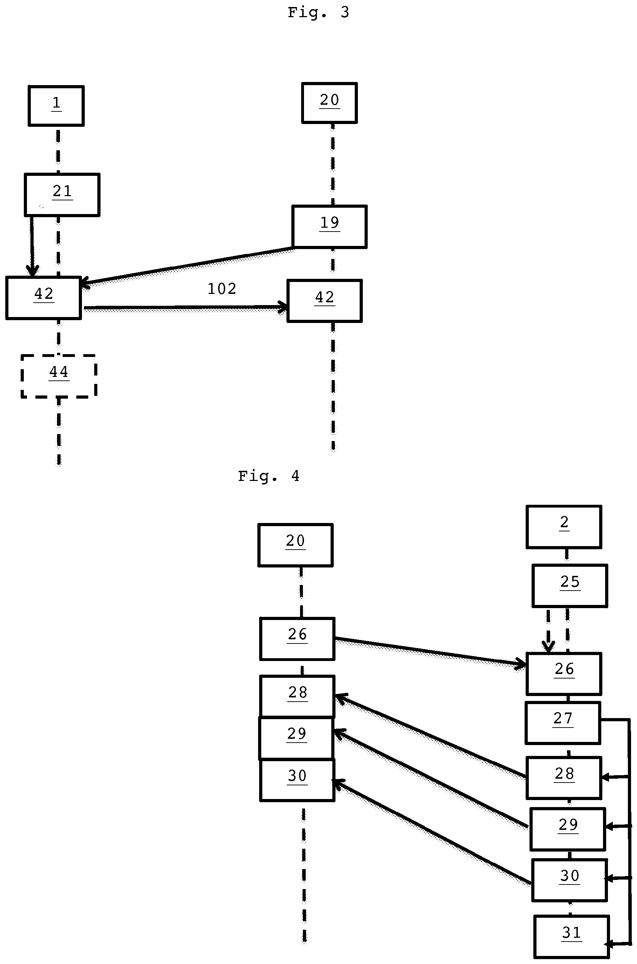

La figure 3 représente le schéma fonctionnel de l'étape d'enregistrement temporaire du message d'Alice.

La réception du message déclenche automatiquement les opérations suivantes :
- l'application cliente d'Alice commande le chiffrement du message (21) avec la clé publique d'Alice (19), transmise par la plateforme (20) à partir de l'information enregistrée dans la base de données (5, 15, 16) et correspondant à son compte. Cette clé publique est par exemple transmise dans le message ou dans le processus d'ouverture de la session. Elle peut également être stockée localement sur l'équipement (1, 11) d'Alice, par exemple dans la mémoire cache d'une application mobile. Cette étape aboutit à un message chiffré (42) contenant des métadonnées généralement non chiffrées, notamment un identifiant du destinataire Bob.
- ce message chiffré (42) est ensuite transmis par une transmission (102) à la plateforme (20) et enregistré, par exemple :
- dans la base de données (5, 15, 16) de la plateforme (20)
- dans une boîte de messagerie tierce liée à Alice
- dans une plateforme Cloud...

La plateforme enregistre par ailleurs dans la base de données (5, 15, 16) de la plateforme (20) les métadonnées (43) contenant notamment l'adresse de stockage du message, par exemple sous forme d'adresse URL.

Optionnellement, l'équipement (1, 11) d'Alice génère une clé aléatoire de chiffrement (44) permettant le chiffrement symétrique du message (42). Cette clé aléatoire (44) est elle-même chiffrée de manière asymétrique avec la clé publique d'Alice (19) de façon à permettre ensuite à Alice de déchiffrer la clé aléatoire (44) avec sa propre clé privée.

### Génération des informations publiques et privées de Bob

Cette étape est asynchrone par rapport au processus d'échange. Elle intervient à un moment quelconque après la réception de la notification du message (25) et du lien associé.

La figure 4 représente le détail de la procédure de création des informations publiques et privées de Bob.

Le mot de passe (27) peut être saisi par un clavier physique ou virtuel par Bob. Il peut aussi être généré par un équipement de type générateur de code.

Ce mot de passe (27) fait l'objet d'un traitement par l'interface de création (26) pour générer :
- un condensat (hash) (28) par application d'un algorithme cryptographique connu
- optionnellement un ou plusieurs nombres aléatoires (29)
- un couple de clés publique (30) et privée (31).

À partir du code exécuté à partir de l'interface de création (26), Bob crée une chaîne de caractère (27) constituant un mot de passe.

L'interface de création (26) génère dans l'exemple décrit un nombre aléatoire (29).

L'interface de création (26) commande le calcul de trois séquences numériques :
- un condensat (28) optionnel, par application d'un traitement de type Sha512 par exemple à la séquence de caractères (27), après application éventuelle d'un algorithme de salage à cette séquence (27)
- un couple de clés publiques privées respectivement (30, 31) par application d'un traitement, par exemple PBKDF2, à une combinaison du nombre aléatoire (29) et du mot de passe (27).

Le résultat de ces opérations conduit à :
- des données secrètes, qui ne seront pas transmises par Bob à des tiers : il s'agit du mot de passe (27) et la clé privée (31)
- des données publiques, qui sont transmises à la plateforme (20) et enregistrées sur le compte de Bob : le condensat (28), le nombre aléatoire (29) et la clé publique (30).

### Rechiffrement du message par Alice

Lorsque Alice a transmis à la plateforme (20) le message chiffré (42) comme mentionné en référence à la figure 3, et que Bob a, de manière asynchrone, procédé à la saisie d'un mot de passe comme mentionné en référence à la figure 4, les conditions de finalisation de l'échange entre Alice, disposant déjà d'un compte, et Bob, qui ne disposait pas d'un compte au moment de l'émission du message (21), sont réunies.

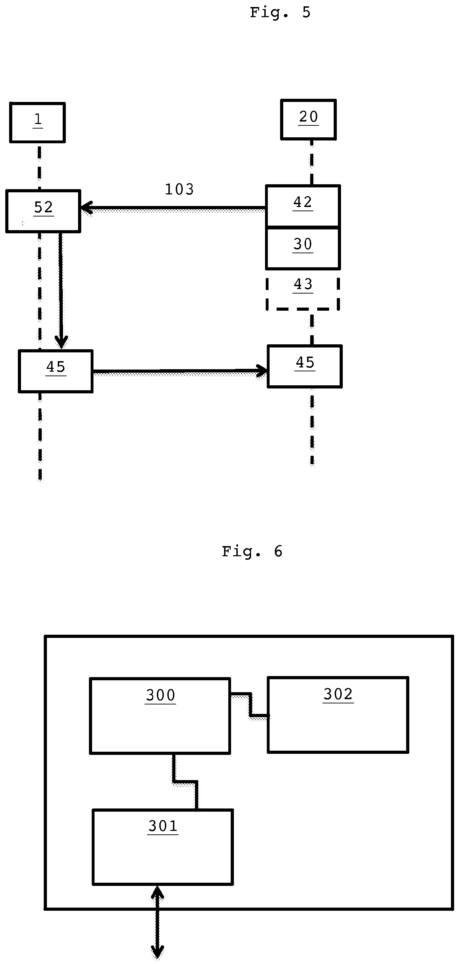

La figure 5 représente le schéma fonctionnel de l'étape de rechiffrement du message par Alice.

Dans un mode d'exécution automatique, lorsqu'un équipement (1, 11) d'Alice est connecté à la plateforme (20), la plateforme (20) commande une étape de rechiffrement (52) du message (42) sur un équipement (1, 11) d'Alice, et non pas sur la plateforme (20).

Si nécessaire, par exemple lorsque l'équipement (1, 11) ne dispose pas d'un cache, cette opération prévoit la transmission (103) par la plateforme (20) à l'équipement connecté (1, 11) d'Alice de :
- la clé publique (30) de Bob
- les métadonnées (43) associées au message chiffré (42)
- optionnellement le message chiffré (42) sur l'équipement connecté (1, 11) d'Alice.

### Première alternative

Selon une première alternative, la plateforme (20) transmet à Alice l'intégralité du message chiffré (42), et Alice déchiffre ce message avec sa clé privée, puis le rechiffre avec la clé publique (30) de Bob que vient de lui transmettre la plateforme (20).

Le message originel (21), initialement chiffré avec la clé publique d'Alice (19) pour aboutir à un message chiffré transitoire (42), est à présent disponible sous une nouvelle forme chiffrée (45) avec la clé publique de Bob.

Le message (42) est supprimé de la plateforme (20) et remplacé par le message chiffré (45).

Cette variante nécessite des traitements lourds, pour des messages importants.

### Deuxième alternative

Selon une autre alternative, la plateforme (20) transmet à Alice seulement la clé aléatoire (44). Alice déchiffre cette clé aléatoire (44) avec sa clé privée, puis rechiffre la clé aléatoire (44) ainsi déchiffrée avec la clé publique (30) de Bob que vient de lui transmettre la plateforme (20).

Dans ce cas, le message chiffré (42) est conservé, seules les métadonnées (43) associées sont mises à jour sur la plateforme grâce à une requête automatique d'Alice.

Cette variante permet de simplifier le traitement de message de gros volume.

### Récupération du message par Bob

La figure 6 représente le schéma fonctionnel de l'étape de récupération du message par Bob.

Après cette opération de rechiffrement, la plateforme (20) envoie à Bob un message numérique comprenant une notification textuelle ou automatique lui permettant de récupérer le message chiffré d'Alice.

Alternativement, l'application de Bob interroge périodiquement la plateforme (20) pour vérifier la disponibilité de nouveaux messages, ou encore Bob se connecte manuellement à la plateforme (20) pour vérifier si de nouveaux messages sont disponibles.

Lors de la connexion, l'équipement informatique (2, 12) de Bob exécute un traitement similaire à celui illustré par la figure 5, à partir du mot de passe (27) qu'il avait initialement créé, et du nombre aléatoire (29) initialement enregistré sur la plateforme (20).

Cela permet à Bob de régénérer d'une part la clé publique (30) et la clé privée (31) qui n'est jamais stockée et ne transite jamais sur le réseau.

Bob peut ensuite récupérer les métadonnées chiffrées (43) et d'autre part le message chiffré (42 ou 45, selon la variante), et procéder à leur déchiffrement avec sa clé privée (31).

Pour les échanges suivants, les deux parties disposent d'un compte sur la plateforme (20) leur permettant de communiquer en mode chiffré de bout en bout.

### Architecture fonctionnelle d'un objet connecté

Dans le cas où les échanges se font non pas entre deux personnes disposant d'équipement informatique, mais entre des objets connectés ou un objet connecté et une personne, l'objet connecté présente une architecture dont la figure 6 représente un exemple.

L'objet connecté comporte de façon connue un calculateur (300) associé à un circuit de communication réseau (301).

Il comporte une zone de mémoire non volatile (302) dans lequel est enregistrée au moins une séquence numérique correspondant au mot de passe (27). Optionnellement, la mémoire non volatile (302) peut aussi contenir une deuxième séquence numérique correspondant au nombre aléatoire (29).

## Revendications

1. - Procédé de transmission d'une information numérique chiffrée de bout en bout, entre un émetteur enregistré sur une plateforme transactionnelle (20), et au moins un destinataire quelconque, comportant les étapes suivantes :
• sélection sur l'équipement informatique (1, 11) de l'émetteur d'une information numérique et d'un identifiant numérique dudit destinataire,
• chiffrement temporaire de ladite information numérique par l'exécution d'une application de chiffrement locale sur l'équipement informatique (1, 11) de l'émetteur avec une clé de l'émetteur,
• transmission par l'équipement informatique de l'émetteur de ladite information numérique chiffrée et dudit identifiant du destinataire à la plateforme transactionnelle (20),
• transmission par la plateforme transactionnelle (20) à l'équipement informatique (2, 12) dudit destinataire d'un message numérique d'invitation comportant un lien dont l'activation par ledit destinataire commande :
o l'exécution d'une application de création sur l'équipement informatique (2, 12) dudit destinataire d'au moins un couple de clés de chiffrement dudit destinataire,
∘ la transmission d'au moins une clé publique dudit destinataire ainsi créée par l'équipement informatique (2, 12) dudit destinataire à ladite plateforme transactionnelle (20) et son enregistrement sur ladite plateforme en relation avec l'identifiant dudit destinataire,
• transmission audit équipement informatique dudit destinataire par l'équipement informatique (1, 11) de l'émetteur de ladite information numérique chiffrée avec la clé publique dudit destinataire, optionnellement par l'intermédiaire de la plateforme transactionnelle (20),
• déchiffrement par l'équipement informatique dudit destinataire de ladite information avec la clé privée du destinataire, dans lequel la clé de l'émetteur est la clé publique de l'émetteur, et en ce que le procédé comporte en outre les étapes suivantes, après l'enregistrement de la au moins une clé publique et avant l'étape de transmission audit équipement informatique dudit destinataire de ladite information numérique chiffrée avec la clé publique dudit destinataire:
• une notification par ladite plateforme transactionnelle (20) à l'équipement informatique (1, 11) de l'émetteur d'un message numérique permettant la récupération et l'enregistrement dans une mémoire temporaire sur l'équipement informatique de l'émetteur de ladite clé publique dudit destinataire ainsi que de l 'information numérique chiffrée avec la clé de l'émetteur,
• le déchiffrement, sur l'équipement informatique (1, 11) de l'émetteur, de ladite information numérique chiffrée avec la clé de l'émetteur, puis le chiffrement de ladite information numérique avec la clé publique dudit destinataire, procédé dans lequel la génération du au moins couple de clés de chiffrement comporte une étape de traitement cryptographique appliqué à une combinaison formée par un mot de passe choisi par le destinataire et un nonce transmis par ladite plateforme transactionnelle audit équipement informatique dudit destinataire, le procédé comportant, lorsqu'il est appliqué à un groupe formé par une pluralité de destinataires :
• une étape d'introduction de clés de chiffrement intermédiaires uniques pour chaque information numérique,
• chaque destinataire accédant auxdites informations numériques, par le déchiffrement avec ses clés personnelles desdites clés intermédiaires,
• des étapes de recalcul de clés intermédiaires en cas de modification dudit groupe de destinataires.

2. - Procédé de transmission d'une information numérique chiffrée de bout en bout selon la revendication 1, dans lequel l'application de chiffrement est constituée par une application WEB transmise par ladite plateforme informatique à l'équipement informatique de l 'émetteur sous forme de code source exécutable par un navigateur avec JavaScript.

3. - Procédé de transmission d'une information numérique chiffrée de bout en bout selon la revendication 1, dans lequel l'application de chiffrement est constituée par une application mobile préalablement installée sur l'équipement informatique de l'émetteur.

4. - Procédé de transmission d'une information numérique chiffrée de bout en bout selon la revendication 1, dans lequel au moins une application de chiffrement est constituée par une application mobile téléchargeable pour son installation sur l'équipement informatique du destinataire, et en ce que ledit message numérique d'invitation contient un mécanisme commandant ledit téléchargement.

5. - Procédé de transmission d'une information numérique chiffrée de bout en bout selon la revendication 1, appliqué à un groupe d'informations numériques, le procédé comportant :
• une étape d'introduction de clés de chiffrement intermédiaires uniques pour chaque information numérique,
• chaque destinataire accédant à l'ensemble dudit groupe d'informations numériques, par le déchiffrement avec ses clés personnelles desdites clés intermédiaires.

6. - Procédé de transmission d'une information numérique chiffrée de bout en bout selon la revendication 1, dans lequel l'un au moins desdits équipements informatiques est constitué par un objet connecté.

7. - Procédé de transmission d'une information numérique chiffrée de bout en bout selon la revendication 6, dans lequel la génération des clés de chiffrement comporte une étape de traitement cryptographique appliqué à une combinaison formée par une information unique secrète enregistrée dans l'objet connecté au moment de sa fabrication et un nonce transmis par ladite plateforme transactionnelle.

8. - Procédé de transmission d'une information numérique chiffrée de bout en bout conforme à la revendication 1 pour un service de messagerie.

9. - Procédé de transmission d'une information numérique chiffrée de bout en bout conforme à la revendication 1 pour un service de partage de fichiers.

10. - Procédé de transmission d'une information numérique chiffrée de bout en bout conforme à la revendication 1 pour un service de communication en temps réel multimédia.

11. - Procédé de transmission d'une information numérique chiffrée de bout en bout conforme à la revendication 1 pour un service de communication d'informations numériques avec un objet connecté.

12. - Procédé de transmission d'une information numérique chiffrée de bout en bout conforme à la revendication 1 pour un service de communication d'informations numériques avec un équipement médical connecté.

13. - Système comprenant un objet connecté comportant une information unique et secrète enregistrée au moment de sa fabrication, un processeur pour l'exécution d'applications enregistrées dans une mémoire locale, et des moyens de communication avec une plateforme transactionnelle, **caractérisé en ce que** l'une desdites applications enregistrées est apte à exécuter les traitements de l'équipement informatique du destinataire propres au procédé selon la revendication 1, l'au moins un couple de clés de chiffrement du destinataire étant généré à partir de l'information unique et secrète, le système comprenant également la plateforme transactionnelle et un équipement informatique d'un'émetteur pour la mise en oeuvre du procédé selon la revendication 1.

14. - Système selon la revendication précédente, dans lequel l'objet connecté comporte en outre un calculateur (300) associé à un circuit de communication réseau (301) et une zone de mémoire non volatile (302) dans lequel est enregistrée au moins une séquence numérique correspondant au mot de passe (27).

## Patentansprüche

1. Verfahren zur Übertragung einer Ende-zu-Ende-verschlüsselten digitalen Information zwischen einem auf einer Transaktionsplattform (20) registrierten Sender und mindestens einem beliebigen Empfänger, das die folgenden Schritte aufweist:
• Auswahl auf der Computerausrüstung (1, 11) des Senders einer digitalen Information und einer digitalen Kennung des Empfängers,
• temporäre Verschlüsselung der digitalen Information durch Ausführung einer lokalen Verschlüsselungsanwendung auf der Computerausrüstung (1, 11) des Senders mit einem Schlüssel des Senders,
• Übertragung der verschlüsselten digitalen Information und der Kennung des Empfängers durch die Computerausrüstung des Senders an die Transaktionsplattform (20),
• Übertragung durch die Transaktionsplattform (20) an die Computerausrüstung (2, 12) des Empfängers einer digitalen Einladungsnachricht, die einen Link aufweist, dessen Aktivierung durch den Empfänger Folgendes steuert:
o die Ausführung einer Anwendung zur Erstellung mindestens eines Verschlüsselungsschlüsselpaars des Empfängers auf der Computerausrüstung (2, 12) des Empfängers
o die Übertragung mindestens eines öffentlichen Schlüssels des Empfängers, der auf diese Weise von der Computerausrüstung (2, 12) des Empfängers erstellt wurde, an die Transaktionsplattform (20) und seine Registrierung auf der Plattform in Verbindung mit der Kennung des Empfängers,
• Übertragung der digitalen Information, die mit dem öffentlichen Schlüssel des Empfängers verschlüsselt ist, durch die Computerausrüstung (1, 11) des Senders an die Computerausrüstung des Empfängers,
wahlweise über die Transaktionsplattform (20),
• Entschlüsselung der Information mit dem privaten Schlüssel des Empfängers durch die Computerausrüstung des Empfängers, wobei der Schlüssel des Senders der öffentliche Schlüssel des Senders ist, und **dass** das Verfahren ferner die folgenden Schritte aufweist, nach der Registrierung des mindestens einen öffentlichen Schlüssels und vor dem Schritt der Übertragung der digitalen Information, die mit dem öffentlichen Schlüssel des Empfängers verschlüsselt ist, an die Computerausrüstung des Empfängers:
• eine Benachrichtigung an die Computerausrüstung (1, 11) des Senders durch die Transaktionsplattform (20) über eine digitale Nachricht, die das Abrufen und die Registrierung in einem temporären Speicher auf der Computerausrüstung des Senders des öffentlichen Schlüssels des Empfängers sowie der digitalen Information, die mit dem Schlüssel des Senders verschlüsselt ist, ermöglicht,
• die Entschlüsselung der mit dem Schlüssel des Senders verschlüsselten digitalen Information auf der Computerausrüstung (1, 11) des Senders, dann die Verschlüsselung der digitalen Information mit dem öffentlichen Schlüssel des Empfängers, Verfahren, bei dem die Generierung des mindestens einen Verschlüsselungsschlüsselpaars einen kryptografischen Verarbeitungsschritt aufweist, der auf eine Kombination angewendet wird, die aus einem vom Empfänger gewählten Passwort und einer Nonce gebildet wird, die von der Transaktionsplattform an die Computerausrüstung des Empfängers übertragen wird, wobei das Verfahren, wenn es auf eine aus einer Vielzahl von Empfängern gebildete Gruppe angewendet wird, Folgendes aufweist:
• einen Schritt zur Eingabe von eindeutigen Zwischenverschlüsselungsschlüsseln für jede digitale Information,
• wobei jeder Empfänger auf die digitalen Informationen durch die Entschlüsselung der Zwischenschlüssel mit seinen persönlichen Schlüsseln zugreift,
• Schritte zur Neuberechnung von Zwischenschlüsseln im Falle von Änderungen der Empfängergruppe.

2. Verfahren zur Übertragung einer Ende-zu-Ende-verschlüsselten digitalen Information nach Anspruch 1, wobei die Verschlüsselungsanwendung aus einer WEB-Anwendung besteht, die von der Computerplattform an die Computerausrüstung des Senders in Form eines Quellcodes übertragen wird, der von einem Browser mit JavaScript ausführbar ist.

3. Verfahren zur Übertragung einer Ende-zu-Ende-verschlüsselten digitalen Information nach Anspruch 1, wobei die Verschlüsselungsanwendung aus einer mobilen Anwendung besteht, die zuvor auf der Computerausrüstung des Senders installiert wurde.

4. Verfahren zur Übertragung einer Ende-zu-Ende-verschlüsselten digitalen Information nach Anspruch 1, wobei mindestens eine Verschlüsselungsanwendung aus einer mobilen Anwendung besteht, die für ihre Installation auf der Computerausrüstung des Empfängers heruntergeladen werden kann, und **dadurch, dass** die digitale Einladungsnachricht einen Mechanismus enthält, der das Herunterladen steuert.

5. Verfahren zur Übertragung einer Ende-zu-Ende-verschlüsselten digitalen Information nach Anspruch 1, das auf eine Gruppe von digitalen Informationen angewendet wird, wobei das Verfahren Folgendes aufweist:
• einen Schritt zur Eingabe von eindeutigen Zwischenverschlüsselungsschlüsseln für jede digitale Information,
• wobei jeder Empfänger auf die Gesamtheit der Gruppe digitaler Informationen durch die Entschlüsselung der Zwischenschlüssel mit seinen persönlichen Schlüsseln zugreift.

6. Verfahren zur Übertragung einer Ende-zu-Ende-verschlüsselten digitalen Information nach Anspruch 1, wobei mindestens eine der Computerausrüstungen aus einem verbundenen Objekt besteht.

7. Verfahren zur Übertragung einer Ende-zu-Ende-verschlüsselten digitalen Information nach Anspruch 6, wobei die Generierung der Verschlüsselungsschlüssel einen kryptografischen Verarbeitungsschritt aufweist, der auf eine Kombination angewendet wird, die aus einer geheimen eindeutigen Information, die in dem verbundenen Objekt zum Zeitpunkt seiner Herstellung registriert ist, und einer von der Transaktionsplattform übertragenen Nonce gebildet wird.

8. Verfahren zur Übertragung einer Ende-zu-Ende-verschlüsselten digitalen Information nach Anspruch 1 für einen Nachrichtendienst.

9. Verfahren zur Übertragung einer Ende-zu-Ende-verschlüsselten digitalen Information nach Anspruch 1 für einen Dateifreigabedienst.

10. Verfahren zur Übertragung einer Ende-zu-Ende-verschlüsselten digitalen Information nach Anspruch 1 für einen Multimedia-Echtzeit-Kommunikationsdienst.

11. Verfahren zur Übertragung einer Ende-zu-Ende-verschlüsselten digitalen Information nach Anspruch 1 für einen Dienst zur Kommunikation digitaler Informationen mit einem verbundenen Objekt.

12. Verfahren zur Übertragung einer Ende-zu-Ende-verschlüsselten digitalen Information nach Anspruch 1 für einen Dienst zur Kommunikation digitaler Informationen mit einer verbundenen medizinischen Ausrüstung.

13. System, umfassend ein verbundenes Objekt, das eine eindeutige und geheime Information umfasst, die zum Zeitpunkt seiner Herstellung registriert ist, einen Prozessor zur Ausführung von Anwendungen, die in einem lokalen Speicher registriert sind, und Mittel zur Kommunikation mit einer Transaktionsplattform, **dadurch gekennzeichnet, dass** eine der registrierten Anwendungen geeignet ist, die Verarbeitungen der Computerausrüstung des Empfängers auszuführen, die dem Verfahren nach Anspruch 1 eigen sind, wobei das mindestens eine Verschlüsselungsschlüsselpaar des Empfängers aus der eindeutigen und geheimen Information generiert wird, wobei das System auch die Transaktionsplattform und eine Computerausrüstung eines Senders zur Durchführung des Verfahrens nach Anspruch 1 umfasst.

14. System nach dem vorstehenden Anspruch, wobei das verbundene Objekt ferner einen Rechner (300) aufweist, der mit einer Netzwerkkommunikationsschaltung (301) und einem nichtflüchtigen Speicherbereich (302) verbunden ist, in dem mindestens eine dem Passwort (27) entsprechende digitale Sequenz registriert ist.

## Claims

1. A method for transmitting an item of end-to-end encrypted digital information, between a transmitter registered on a transactional platform (20), and at least one recipient, comprising the following steps:
• selecting, on the computer equipment (1, 11) of the transmitter, an item of digital information and a digital identifier of said recipient,
• temporarily encrypting said digital information by executing a local encryption application on the computer equipment (1, 11) of the transmitter with a key of the transmitter,
• transmitting, by the computer equipment of the transmitter, said item of encrypted digital information and said identifier of the recipient to the transactional platform (20),
• transmitting, by the transactional platform (20), to the computer equipment (2, 12)
∘ of said recipient, a digital invitation message comprising a link whose activation by said recipient orders:
∘ executing an application for creating, on the computer equipment (2, 12) of said recipient, at least one pair of encryption keys of said recipient
∘ transmitting at least one public key of said recipient thus created by the computer equipment (2, 12) of said recipient to said transactional platform (20) and registering it on said platform in relation to the identifier of said recipient,
• transmitting to said computer equipment of said recipient, by the computer equipment (1, 11) of the transmitter, said item of digital information encrypted with the public key of said recipient, optionally via the transactional platform (20),
• decrypting, by the computer equipment of said recipient, said information with the private key of the recipient, wherein the key of the transmitter is the public key of the transmitter, and **in that** the method further comprises the following steps, after the registration of the at least one public key and before the step of transmitting to said computer equipment of said recipient said item of digital information encrypted with the public key of said recipient:
• notifying, by said transactional platform (20) to the computer equipment (1, 11) of the transmitter, a digital message allowing the retrieval and saving in a temporary memory on the computer equipment of the transmitter, said public key of said recipient as well as digital information encrypted with the key of the transmitter,
• decrypting, on the computer equipment (1, 11) of the transmitter, said digital information encrypted with the key of the transmitter, then encrypting said item of digital information with the public key of said recipient, a method wherein generating the at least a pair of encryption keys comprises a cryptographic processing step applied to a combination formed by a password chosen by the recipient and a nonce transmitted by the recipient and a nonce transmitted by said transactional platform to said computer equipment of said recipient, the method comprising, when it is applied to a group formed by a plurality of recipients:
• a step of introducing unique intermediate encryption keys for each item of digital information,
• each recipient accessing said digital information, by decrypting said intermediate keys with its personal keys,
• steps for recalculating intermediate keys in the event that said group of addressees is modified.

2. The method for transmitting an item of end-to-end encrypted digital information according to claim 1, wherein the encryption application consists of a WEB application transmitted by said computer platform to the computer equipment of the transmitter in the form of source code executable by a browser with JavaScript.

3. The method for transmitting an item of end-to-end encrypted digital information according to claim 1, wherein the encryption application consists of a mobile application previously installed on the computer equipment of the transmitter.

4. The method for transmitting an item of end-to-end encrypted digital information according to claim 1, wherein at least one encryption application is constituted by a downloadable mobile application for installation thereof on the computer equipment of the recipient, and **in that** said digital invitation message contains a mechanism to command said downloading.

5. The method for transmitting an item of end-to-end encrypted digital information according to claim 1, applied to a group of digital information, the method comprising:
• a step of introducing unique intermediate encryption keys for each item of digital information,
• each recipient accessing the set of said group of digital information, by decrypting said intermediate keys with its personal keys.

6. The method for transmitting an item of end-to-end encrypted digital information according to claim 1, wherein at least one of said computer equipment is constituted by a connected object.

7. The method for transmitting an item of end-to-end encrypted digital information according to claim 6, wherein the generating of the encryption keys comprises a cryptographic processing step applied to a combination formed by an item of unique secret information registered in the connected object at the time of its manufacture and a nonce transmitted by said transactional platform.

8. The method for transmitting an item of end-to-end encrypted digital information according to claim 1 for a messaging service.

9. The method for transmitting an item of end-to-end encrypted digital information according to claim 1 for a file-sharing service.

10. The method for transmitting an item of end-to-end encrypted digital information according to claim 1 for a real-time multimedia communication service.

11. The method for transmitting an item of end-to-end encrypted digital information according to claim 1 for a digital information communication service with a connected object.

12. The method for transmitting an item of end-to-end encrypted digital information according to claim 1 for a digital information communication service with a connected medical device.

13. A system comprising a connected object comprising an item of unique and secret information recorded at the time of its manufacture, a processor for executing applications recorded in a local memory, and means for communicating with a transactional platform, **characterized in that** one of said recorded applications is able to execute the processing operations of the computer equipment of the recipient specific to the method according to claim 1, the at least one pair of encryption keys of the recipient being generated from the unique and secret information, the system further comprising the transactional platform and a computer equipment of a transmitter for implementing the method according to claim 1.

14. The system according to the preceding claim wherein the connected object further comprises a calculator (300) associated with a network communication circuit (301) and a non-volatile memory area (302) wherein at least one digital sequence corresponding to the password (27) is recorded.
